(19) Europäisches Patentamt
European Patent Office
Office européen des brevets

(11) EP 1 510 098 B1

(12) EUROPEAN PATENT SPECIFICATION

(45) Date of publication and mention
of the grant of the patent:
14.10.2009 Bulletin 2009/42

(51) Int Cl.:
*H04W 48/06* (2009.01)

(21) Application number: 03732908.3

(86) International application number:
PCT/IB2003/002601

(22) Date of filing: 30.05.2003

(87) International publication number:
WO 2003/103327 (11.12.2003 Gazette 2003/50)

(54) **RELATION-BASED FUZZY- AND DISCRETE-LOGIC BASED DECISION AND DYNAMIC TUNING CONTROL**

RELATION-GEGRÜNDETES FLOCKIGES UND GETRENNT-LOGIK GRÜNDETEN MULTIDIMENSIONAL ENTSCHEIDUNG UND DYNAMISCHE ABSTIMMENDE STEUERUNG

DECISION MULTIDIMENSIONNELLE FLOUE A BASE DE RELATION ET DE LOGIQUE DISCRETE ET CONTROLE DE REGLAGE DYNAMIQUE

(84) Designated Contracting States:
AT BE BG CH CY CZ DE DK EE ES FI FR GB GR HU IE IT LI LU MC NL PT RO SE SI SK TR

(30) Priority: 31.05.2002 US 384891 P

(43) Date of publication of application:
02.03.2005 Bulletin 2005/09

(73) Proprietor: Nokia Corporation
02150 Espoo (FI)

(72) Inventor: EERO, Wallenius
FIN-36200 Kangasala (FI)

(74) Representative: Style, Kelda Camilla Karen et al
Page White & Farrer
Bedford House
John Street
London, WC1N 2BF (GB)

(56) References cited:
WO-A-94/11972          WO-A-99/12379
US-A- 6 067 287

**Description**

FIELD OF INVENTION

The present invention relates to policy-based decision-making in communications network elements.
The invention has been developed primarily for use in Third Generation (3G) telecommunications networks, and more particularly for allowing admission control in an Internet Protocol (IP) Radio Access Network (RAN) element. However, it will be appreciated that the invention has application in other policy-based decision-making elements that use rule-based logic for configuration and dynamic tuning, including (but not limited to) network elements, Policy Decision Points (PDPs), and rule-based engines, whether acting alone or co-operating with other decision-making elements.

BACKGROUND OF INVENTION

Proposed 3G networks have considerably higher capabilities than, say, GSM in terms of data rates and potential data quality. Whilst this opens up possibilities for improved services to users of mobile communications equipment, it also substantially complicates other issues, such as controlling user access. The matter is complicated by factors such as Guaranteed Bit-Rate (GBR) services based on Quality of Service (QoS) parameters, in which a user will (typically) pay a premium for access to a predetermined level of service.
Decisions about access to network resources are typically made in network elements, either at the cell level or at the subscription level in, for example, a Serving GPRS Support Node (SGSN). Admission control procedures must ensure adequate network resources for 3G QoS on IP (Internet Protocol) and UMTS (Universal Mobile Telecommunications System) layers by controlling the access of the network connections based on the load of the local network domain. In this context, admission control denotes subscriber admission control in 3G networks implemented by standardized policy management functionality. The admission control has two purposes in a 3G network:

to verify administrative rights of a user for the call or connection (CN [Core Node) EDGE); and

to control whether the required resources are available (MT [Mobile Terminal], UTRAN [IMTS Terrestial Radion Access Network], CN EDGE and Gateway).

The relationship between admission control and QoS is based on different network load factor Key Performance Indicators (KPIs), which can be measured within the network. These factors can include, for example, edge-to-edge delay, network load in the local network domain, available bandwidth in the domain, available radio channels and channel types, and Bit Error Rate (BER). All of these values can be used to tune up the multidimensional admission control (MDAC) model. However, since all admission control decisions have to be decided per subscriber, the execution load in the admission control unit can be relatively high.
US 6 067 287 discloses a neural fuzzy logic connection admission controller in a mode of an ATM communication network. The controller provides a decision signal in response to an available bandwith capacity, a congestion control action and a cell less ratio.
It is an aim of embodiments of the present invention to provide an improved method and apparatus for implementing policy based decisions in a communications network. In a particularly preferred form, the aim of embodiments of the invention is to reduce the execution load associated with implementing admission control procedures in a 3G network.
According to a first aspect of the present invention there is provided an admission control unit for users in a wireless communication system, said unit being arranged to control the admission of calls arriving from the users depending on a parameter which is representative of the load in said system, wherein the load parameter is derived from a fuzzy logic composition of at least two indicators, each defining different performance characteristics of the load in said system, wherein the admission control unit determines whether to allow admission of the call by comparing said load parameter with a threshold value; and wherein said parameter representative of load comprises a network load value.
According to another aspect of the present invention there is provided a method for controlling the admission of calls in a wireless communication network having a load, the method comprising the step of: receiving at least two indicators each defining a different performance characteristic of the load in the network; combining said indicators using fuzzy logic to determine a parameter representative of the load of the network; comparing said load parameter with a threshold value; and deciding based on said load parameter whether to admit calls arriving from the users; wherein said deciding comprises comparing said load parameter to a threshold value; and wherein said parameter representative of load comprises a network load value.
According to a further aspect of the present invention there is provided a wireless communication system having a load formed by calls transferred between users of the system, the system comprising means for controlling the admission of calls arriving from the users depending on a comparison of a parameter which is representative of the system load with a threshold load value, wherein the value of the load parameter is a fuzzy logic combination of at least two indicators each defining different performance characteristics of load in the system; wherein said parameter representative of load comprises a network load value.

BRIEF DESCRIPTION OF INVENTION

Preferred embodiments of the invention will now be described, by way of example only, with reference to the accompanying drawings, in which:

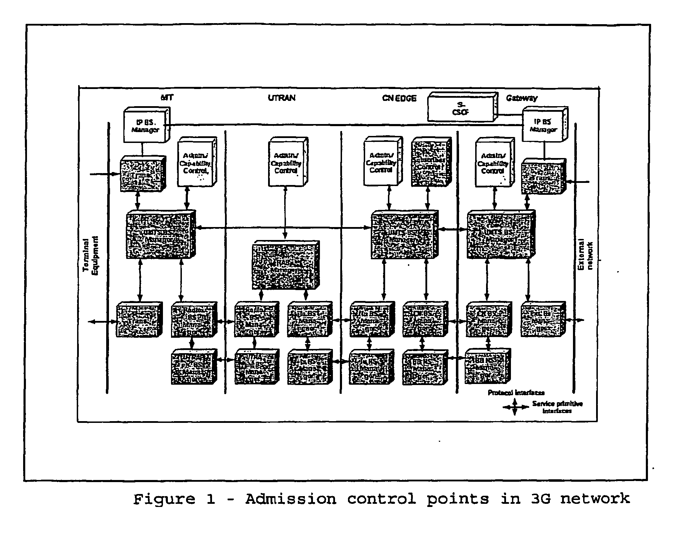

Figure 1 shows admission control points in a 3G network, in which the invention is implemented;

Figure 2 shows an example of min-min and max-max interpretation of data, in accordance with the invention;

Figure 3 shows a discrete Call Admission Control (CAC) embodiment of the invention;

Figure 4 is a visual representation of a network load decision made in accordance with an embodiment of the invention;

Figure 5 shows an implementation of an embodiment of the invention; and

Figure 6 is a visual representation of a Multidimensional Admission Control (MDAC) structure, in accordance with an embodiment of the invention.

DETAILED DESCRIPTION OF PREFERRED EMBODIMENTS

QoS control is based on correctly operating admission control (i.e. controlling user access) to offer adequate network resources for 3G QoS on IP and UMTS layers. The relationship between admission control and QoS is based on different network load factors (KPIS) which can be obtained from the network.

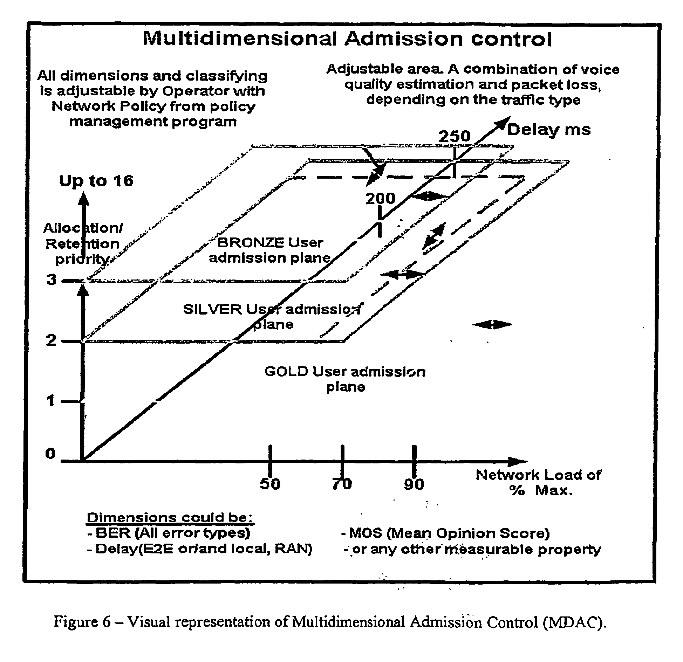

Figure 6 depicts the basic idea of the multidimensionality of the QoS attributes (or KPIs). All of the QoS attributes mentioned in the 3GPP [TS23.107] standard can be used as part of the dynamically tuned delay or load part or they can be split into separate dimensions in the admission control plane. TS23.107 is hereby incorporated by reference.

Each of the KPIs are to some extent related to each other and they are not fully independent and orthogonal. Also, the correlation between KPIs varies in every environment, for example as a result of different configurations (or combination of devices), traffic mixes or network loads.

Therefore, a technique is needed that can take into account the various KPIs and varying environmental conditions so as to dynamically and flexibly tune to the network conditions.

Although it is expected that fuzzy logic theory is well known to those skilled in the art and beyond the scope of the present invention, it is useful to provide a brief summary of the important characteristics of fuzzy logic used by embodiments of the present invention.

Broadly speaking, fuzzy logic provides a more general definition than conventional Boolean logic. Specific systems have parameters that are defined as either being false "0" or true "1" which are often referred to as "crisp" numbers, however by using a range of continuous values between "0" and "1" fuzzy logic is extended so as to incorporate the idea of partial truth. So-called "fuzzy subsets" (also known as "membership functions" which will be referred to hereinafter) are another important characteristic of fuzzy logic, and allow values of a system to be better defined in terms of their partial truth.

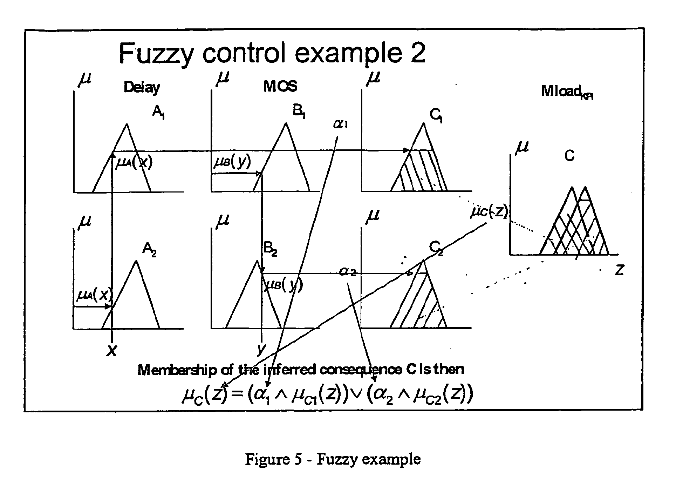

This is best illustrated by a simple physical example which is often used. Consider the set S as being the set of "people" and a fuzzy subset TALL is defined which will answer the question "to what degree is a person x (in the set of people S) tall?". In defining the system it is necessary to assign to each person a degree of membership in the subset TALL. The easiest way to do this is with a membership function based on the person's height. For example, each person's height could be represented as a degree of tallness based on the membership function. Membership functions are capable of taking many different forms and are often represented as triangles as shown in the waveforms of Figure 5 (which will be discussed later), but can also be a simple straight line or more complex functions.

The real benefit of membership functions and fuzzy logic is that they can often be based on more than one characteristic (or subset). So, in the example, it is possible to re-define a membership function to take into account both height and age so that a person can be judged on being "tall for their age". This is often referred to as a fuzzy relation (or two-dimensional membership function).

A fuzzy system is defined by a collection of membership functions and rules (i.e. rule base) to reason about data. The term "composition" refers to the process when all of the fuzzy subsets assigned to a variable (or set) are combined together to form a single fuzzy subset. Various compositions are possible and embodiments of the present invention describe using max-* and max-min compositions. Moreover, "defuzzification" is an optional process which can be used to convert from a fuzzy number to a crisp number.

Thus the use of fuzzy logic is ideal for modelling complex real world systems and is therefore perfectly suited for admission control of telecommunication network having a plurality of potentially correlated KPIs. That is, fuzzy logic is able to take into account the correlation between each KPI or at least can be expressed as a fuzzy relation with a membership function that describes the extent that the KPIs in question are related to each other.

The preferred embodiment is a method and corresponding apparatus for implementing a Multidimensional Admission Control (MDAC) in a 3G network. The embodiments make use of an Allocation/Retention Priority (ARP) value. In this description, the term multidimensionality refers to the incorporation of multiple measured network KPIs into one subscriber admission control load value, referred to herein as $Mload_{KPI}$. The value of the $Mload_{KPI}$ can be any combination of available KPIs.

In the preferred embodiment, multidimensional admission control (MDAC) is implemented in fuzzy logic using max-min or max-* composition. The multidimensionality is based on, for example, the following factors: edge-to-edge delay, BER, price factor and $Mload_{KPI}$ parameter. Each of these factors represents a measure of network quality at a particular time. The value of each factor represents a certain portion of resource load, e.g. network bandwidth, and overall delay budgeting and jitter. By defining how these factors correlate to the total or specific load (bandwidth, delay, etc.), there is generated a series of crossing curves where $y$ presents $Mload_{KPI}$ and each $x$ presents one of the admission control dimensions. By using fuzzy logic max-min (or max-*) composition, it is possible to quickly define an admission load parameter $Mload_{KPI}$, which defines the curve to follow when defining an $Mload_{KPI}$ admission decision value.

METHEMATICAL FUZZY LOGIC DEDUCTION MODEL

Mathematically, the MDAC of the preferred embodiment is based on classical fuzzy logic max-* or max-min fuzzy relation, as shown in equations 1 and 2:

For max-*:

$$\widetilde{R}_{1^\bullet} \circ \widetilde{R}_2 = \left\{ \left( (x, z), \max_y \left( \mu_{R_1}(x, y) * \mu_{R_2}(y, z) \right) \right) \middle| x \in X, y \in Y, z \in Z \right\}$$

$$(1)$$

and for max-min:

$$\widetilde{R}_1 \circ \widetilde{R}_2 = \left\{ \left( (x, z), \max_y \left( \min \left( \mu_{R_1}(x, y) * \mu_{R_2}(y, z) \right) \right) \right) \middle| x \in X, y \in Y, z \in Z \right\} (2)$$

in which $x$, $y$ and $z$ can represent any three dimension admission parameter combinations. In this case the membership functions $\mu_{R1}$ and $\mu_{R2}$ are fuzzy values for the traffic load in the network domain.

Examples of the fuzzy logic model as applied are shown in Table 1 and Table 2. In those tables, it can be seen that the load function $F(x)=y$ can be defined with only a few points calculated and inserted into a 2-dimensional table. These tables can then be combined with the max-min fuzzy logic model.

Once deduced in this manner, the $Mload_{KPI}$ parameter is used for a connection admission control decision.

This relation deduction model can also be used in a non-fuzzy form. It can be done by removing membership functions $\mu_{R1}$ and $\mu_{R2}$ from formulas 1 and 2 and replacing them with discrete values obtained from the discrete functions $F_{R1}$ and $F_{R2}$ in equations 3 and 4.

For max-*:

$$R_{1^\bullet} \circ R_2 = \left\{ \left( (x,z), \max_y \left( F_{R_1}(x,y) * F_{R_2}(y,z) \right) \right) \middle| x \in X, y \in Y, z \in Z \right\} \qquad (3)$$

and for max-min:

$$R_1 \circ R_2 = \left\{ \left( (x,z), \max_y \left( \min \left( F_{R_1}(x,y) * F_{R_2}(y,z) \right) \right) \right) \middle| x \in X, y \in Y, z \in Z \right\} \qquad (4)$$

Variables in the formula are:

$R_1$ and $R_2$ : Relation tables constructed from functions $F_{R1}$ and $F_{R2}$; and
$x$, $y$ and $z$ and are the parameters for functions $F_{R1}$ and $F_{R2}$.

If discrete functions $F_{R1}$ and $F_{R2}$ are used, the final value generated is a real measure (%) of the actual network load in the domain, which can be used in making an admission decision.

MULTIDIMENSIONAL ADMISSION CONTROL DISCRETE LOGIC EXAMPLE 1

The next example depicts the functionality of the MDAC using two 2-D tables where the dimension $y$ is the $Mload_{KPI}$ value and each of the other parameters can be any desired traffic property such as delay, Mean Opinion Score (MOS), jitter etc. It will be appreciated that any suitable number of tables can be used.
Parameters such as delay can also be fuzzy, as in the example. The goal is to determine what is the *FinalLoad* value for the call admission control (CAC) decision.
A relation approximation table is provided for each of the dimensions of interest:

Table 1. $Mload_{KPI}(z)$Measured Delay(y) Table
$Mload_{KPI}(z)$

$$\tilde{R}_1 = \begin{bmatrix} >70\% & >80\% & >90\% & >95\% & \\ .89 & .92 & .93 & .94 & >250ms \\ .70 & .75 & .78 & .81 & >150 \leq 250ms \\ .60 & .65 & .70 & .71 & >100 \leq 150ms \\ .50 & .55 & .60 & .63 & \leq 100ms \end{bmatrix} Delay(y)$$

For the relation, it is also necessary to obtain a measurement value from the network. The next table depicts the values and value ranges of the dimension, although only one value pair can be achieved from the network at a time in real life.

Table 2 $Mload_{KPI}$/Measured Jitter(y) Table
Jitter(y)

$$\tilde{R}_2 = \begin{bmatrix} <1ms & <3ms & <6ms & <12ms & \\ .90 & .94 & .95 & .97 & >95\% \\ .80 & .83 & .86 & .89 & >90\% \\ .70 & .75 & .78 & .81 & >80\% \\ .60 & .65 & .70 & .72 & >70\% \end{bmatrix} Mload_{KPI}(x)$$

For a measured Delay of 120 ms and Jitter of 5ms, then corresponding rows and columns from the tables 1 and 2 are determined, as shown in tables $\tilde{R}_1$ and $\tilde{R}_2$:

$$Mload_{KPI}(z)$$

$$\tilde{R}'_1 = \begin{bmatrix} >70\% & >80\% & >90 & >95\% \\ .60 & .65 & .70 & .71 \end{bmatrix} Selected(y)$$

$$Mload_{KPI}(x)$$

$$\tilde{R}'_2 = \begin{bmatrix} >70\% & >80\% & >90\% & >95\% \\ .70 & .78 & .86 & .95 \end{bmatrix} Selected(y)$$

The next step is to make the relation between $\tilde{R}'_1$ and $\tilde{R}'_2$ which is marked as $\tilde{R}'_1 \bigcirc \tilde{R}'_2 = \tilde{R}_3$. The max-max composition would then be:

$$Mload_{KPI}(z)$$

$$\tilde{R}'_1 \circ \tilde{R}'_2 = \begin{bmatrix} >70\% & >80\% & >90\% & >95\% \\ .97 & .97 & .97 & .98 \end{bmatrix} FinalLoad(x)$$

and max-min case:

$$Mload_{KPI}(z)$$

$$\tilde{R}'_1 \circ \tilde{R}'_2 = \begin{bmatrix} >70\% & >80\% & >90\% & >95\% \\ .70 & .75 & .75 & .75 \end{bmatrix} FinalLoad(x)$$

The next step is to get the value of $Mload_{KPI}$ from the system and select the appropriate *FinalLoad* value from the max-* or max-min relation table. This means that if a measured $Mload_{KPI}$ value is 75%, the *FinalLoad* would be .97 in max-* case and .70 in max-min case. In this case the fuzzy membership function value is a measure and value of association for the parameter to a measurement dimension. In this case the fuzzy function value has been directly translated into a network load value.

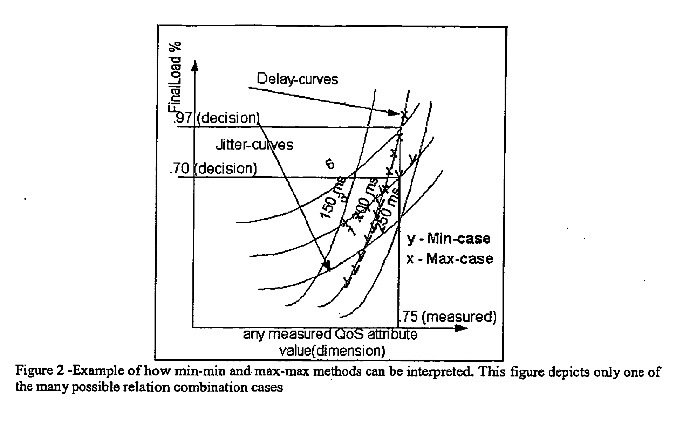

Figure 2 depicts how the min and max methods should be interpreted. In the min -case the decision system always chooses the path that produces the lowest $Mload_{KPI}$ value, whereas the max case is the opposite, in that the highest $Mload_{KPI}$ value is used. All of the parameter values can be fuzzy or discrete.

<u>MULTIDIMENSIONAL ADMISSION CONTROL DISCRETE LOGIC EXAMPLE 2</u>

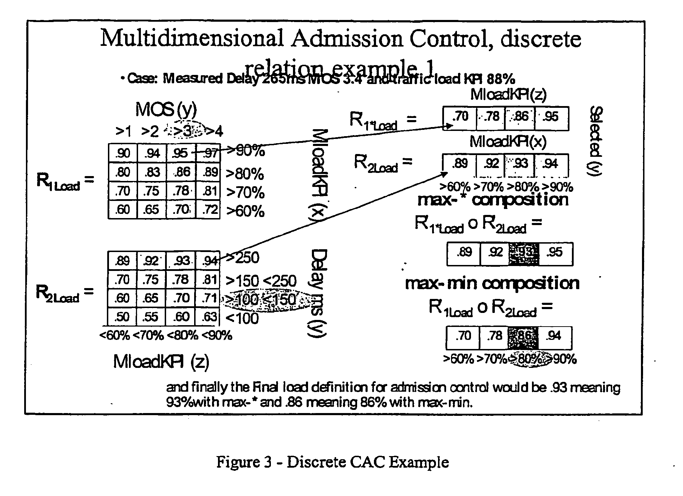

Figure 3 presents a simple practical example for determining a final load factor definition by discrete relation. Case parameters are: MOS 3.4 and Delay of 265 ms. In the example, predefined mapping tables $R_{1Load}$ and $R_{2Load}$ are used. These tables may be achieved by RT-measurements (real time) from the network or by theoretical simulations. The tables can be short-term or long-term controlled as required and they act as the main tuning and configuration point to the CAC.

The first phase is to measure or calculate domain MOS and Delay values for the first stage, $R'_{1Load}$ and $R'_{2Load}$ relation vector selections. All values can be fuzzy membership or discrete values.

In the second phase we make max-* or max-min relation operation between the determined 1-D vectors. The result is two vectors, which can be used as the *FinalLoad* descriptor for the domain. The final load selection is then executed by selecting the column that corresponds to the MloadKPI value achieved from the KPI calculation. The next figure visualizes the selection functionality and the way the decision is related to the "near" by MOS and delay values.

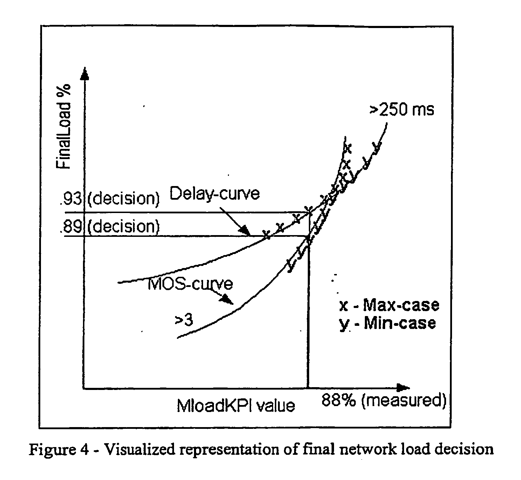

As can be seen from Figure 4, the load selection changes from the delay curve to the MOS curve as the load value changes from 70% to 80% whilst moving upwards along the curves. The situation will be the same with any other crossing property mapping case.

Also Figure 4 shows that the basic load value of 88% changes into z = 89% in the min case and z=93% in the max case. This change means that the delay is the dominant KPI in the min case, whereas MOS is the dominant KPI in the max case.

MULTIDIMENSIONAL ADMISSION CONTROL FUZZY LOGIC EXAMPLE

In a Fuzzy logic case we use same kinds of mapping tables as presented in the previous discrete examples. The difference between the fuzzy and discrete cases is the interpretation of the values in the table and the way values are achieved from the real performance system of a 3G network.

In discrete case it is assumed that there is always a dominant QoS attribute, which defines the final $Mload_{KPI}$ leading to FinalLoad values. In the fuzzy case, the values in the table are membership values, which have to be defuzzified in order to get the final decision value $FinalLoad.$ Figure 5 depicts the decision process in the fuzzy case.

In the fuzzy case, the same tables as shown in the discrete example are used, but the difference is the interpretation of the values in the tables and of course the way the values are calculated from the real performace of a 3G network. Therefore, in the fuzzy case, the values in the tables are membership values requiring more computation effort to calculate than the pre-defined discrete values. The membership values can be calculated using a variety of so-called "T-norms", which are well known and are beyond the scope of the present invention. That is, in the fuzzy case the values also need to be defuzzified in order to get a final $Mload_{KPI}$.

In the fuzzy case, a fuzzification process needs to be undergone as shown in Figure 5, in which the membership values of the KPIs, i.e. Delay and MOS, are fuzzified to form the fuzzified values $\alpha_1$ and $\alpha_2$ respectively. Also, $Mload_{KPI}$ is represented as the $\mu_c(z)$ fuzzified value.

As can be seen in the example, the inferred consequence C can be calculated from equation 5.

$$\mu_C(z) = (\alpha_1 \wedge \mu_{C1}(z)) \vee (\alpha_2 \wedge \mu_{C2}(z)) \qquad (5)$$

From this, we can conclude and make ruling and relation as equation 6:

$$\widetilde{R}_k = \widetilde{A}_k \rightarrow \widetilde{B}_k \qquad (6)$$

Ruling can also be expressed for a common N rule case, equation 7:

$$\widetilde{R} = \bigcup_{k=1}^{N} \widetilde{R}_k \qquad (7)$$

This example case can also be put into another form: If the Delay $x_1$ is $\tilde{A}_1$ and $x_2$ is $\tilde{A}_2$ then $\widetilde{R}_A = \tilde{A}_1,$ o $\tilde{A}_2$ and MOS $y_1$ is $B_1$ and $y_2$ is $B_2$ then $\widetilde{R}_B = \widetilde{B}_1 \bigcirc \widetilde{B}_2$. Then we can say $\widetilde{R}_c = \widetilde{R}_A \bigcirc \widetilde{R}_B$

The value for z $(Mload_{KPI}$ in the example) can then be calculated from equation 8, which in this embodiment will provide the MOM (Mean of Max) in the result of Figure 5:

$$z = \frac{\sum_{k=1}^{N} \alpha_k H_k W_k}{\sum_{k=1}^{N} \alpha_k H_k} \qquad (8)$$

where Wk is the value where the membership function Hk reaches its maximum (i.e. "1" if normalized).

The final admission control decision can then be made according to the following decision rules:

Gold class example:

*Table 3. Call admission decision example*

| Final load value z | Blocking threshold value | Dropping threshold value | Admission decision |
|---|---|---|---|
| 73% load (0.73 form Fuzzy system) | 75% | 80% | Call admitted No call dropping |
| 83% load (0.83 form Fuzzy system) | 80% | 85% | Call not admitted No call dropping |
| 92 % load (0.92 form Fuzzy system) | 85% | 90% | Call not admitted Gold class calls dropped |

All other subscriber classes will be handled in a similar way. Only the threshold values will be different, lower for lower class subscribers. There will also be a special class, which will bypass all the other classes. It uses an ARP value 0 and it is for government, official and emergency call priorities. In some cases the ARP value 0 can be used for both official and Gold subscriber classes. The rules used for the rule based admission control system can be in the following form.

For call Blocking:

If $Mload_{KPI}$ = *GoldBlockingThresholdValue* then Block all GoldUserCallType and SilverUserCallType and BronzeUserCallType and EconomyUserCallType

If $Mload_{KPI}$ = *SilverBlockingThresholdValue* then Block all SilverUserCallType and BronzeUserCallType and EconomyUserCallType

If $Mload_{KPI}$ = *EconomyBlockingThresholdValue* then Block all EconomyUserCallType

And in general

*If $Mload_{KPI}$ =xxxBlockingThresholdValue* then Block all xxxUserCallType and (all other lower priority user class calls)

For call Dropping:

If $Mload_{KPI}$ = *GoldDroppingThresholdValue* then Drop all GoldUserCallType and SilverUserCallType and BronzeUserCallType and EconomyUserCallType

If $Mload_{KPI}$ = *EconomyBlockingThresholdValue* then Drop all EconomyUserCallType

And in general

If $Moad_{KPI}$ = *xxxBlockingThresholdValue* then Drop all xxxUserCallType and (all other lower priority user class calls)

This model is compatible with the Internet Engineering Task Force (IETF) standards and a policy based control model with extendedactions (here Blocking and Dropping) that are concern with other actions over and above the packet flow type actions defined within a PEP(Policy Enforcement Point). It is envisaged that a new extended definition for PEP functionality, for example defined as Extended PEP (EPEP) could be used in this context, wherein the extended actions here would also be call dropping and call blocking actions.

It should also be appreciated that elements such as LPDP (Local Policy Decision Point) and PEP (Policy Enforcement Point) are part of Policy Base management standard. The LPDP is the point where policy decisions are actually made whereas the PEP is the point where the policy descsions are actually enforced. Although policy based management is not mandatory with MDAC, it is envisaged in other embodiments that MDAC could supplement and cooperate nicely with policy based management standards. For example, in a policy based management system the functionality of the MDAC could be implemented within a PEP, or at least could cooperate closely with the PEP. MDAC provides the FinalLoad KPI value to policies (rules) applied in PEP on the arriving calls from the subscribers to the network.

All QoS attribute parameter values mentioned in 3GPP [TS23.107] can be used as a part of the dynamically tuned delay or load part or they can be separate dimensions in the admission control plane.

The embodiments of the present invention have described max-min and max-* composition techniques, however it should be appreciated that other fuzzy logic composition techniques such as min-min and min-max can also be used.

It should be appreciated that the values used in the tables of the described embodiments are fictional and should be set for each real network environment individually by a process of preliminary network design. In this way values can be tuned to suit the exact network characteristics by using normal network design/redesign autotuning mechanisms.

The present embodiments can be used for 3G network admission control development work, tuning of an existing 3G admission control system and finding optimal operating parameters for the operating admission control product. As mentioned, the present invention in other embodiments can implement policy-based decision-making in any suitable element in a telecommunications network.

Although the invention has been described with reference to a number of specific embodiments, it will be appreciated by those skilled in the art that the invention can be embodied in many other forms, varying within the scope of the appended claims.

### Claims

1. An admission control unit for users in a wireless communication system, said unit being arranged to control the admission of a call arriving from a user depending on a parameter which is representative of load in said system, and **characterized in that** said parameter is derived from a fuzzy logic composition of at least two indicators, each defining different performance characteristics of the load in said system, wherein the admission control unit is adapted to determine whether to allow admission of the call by comparing said load parameter with a threshold value; and wherein said parameter representative of load comprises a network load value.

2. The unit according to claim 1, wherein the load parameter and indicators are membership functions having fuzzy values.

3. The unit according to claim 1, wherein the load parameter and indicators are discrete functions having discrete values.

4. The unit according to claim 2, wherein the membership function is a triangle.

5. The unit according to claim 2, wherein the membership function is a straight line having a slope with either increasing or decreasing gradient.

6. The unit according to any preceding claim, wherein the admission control unit is implemented in at least one policy-based element of the wireless communication system that uses rule-based logic for configuration and dynamic tuning.

7. The unit according to any preceding claim, wherein the fuzzy logic composition is manx-* composition.

8. The unit according to claims 1 to 6, wherein the fuzzy logic composition is max-min composition.

9. The unit according to any preceding claim, wherein at least one of the two indicators is a quality of supply attribute of the load.

10. The unit according to claim 9, wherein said indicators comprise one or more of the following: jitter, delay, BER, MOS or bandwidth capacity.

11. The unit according to claim 10, wherein the indicators are at least to some extent orthogonal to each other.

12. A method for controlling the admission of calls in a wireless communication network having a load, the method being **characterized** to the step of:

receiving at least two indicators each defining a different performance characteristic of the load in the network; combining said indicators using fuzzy logic to determine a parameter representative of the load of the network; comparing said load parameter with a threshold value; and

deciding based on said load parameter whether to admit a call arriving from a user, wherein said deciding comprises comparing said load parameter to a threshold value; and wherein said parameter representative of load comprises a network load value.

13. The method according to claim 12, wherein the step of receiving at least two indicators comprises forming a table for each indicator having values corresponding to the load parameter.

14. The method of claim 13, wherein the table values are discrete values.

15. The method of claim 13, wherein the table values are membership function values.

16. The method of claim 13 to 15, wherein a first and second set of values is selected from each table corresponding to the respective indicators depending on values of said indicators in the system.

17. The method according to claim 16, wherein in said combining step the first and second set of values are combined to form a third set using said fuzzy logic composition.

18. The method according to claim 17, wherein the load parameter is determined by selecting one of the values of the third set which corresponds to the indicator assumed to be most dominant of the at least two indicators.

19. A wireless communication system having a load formed by calls transferred between users of the system, the system comprising means for controlling the admission of calls arriving from the users depending on a comparison of a parameter which is representative of the system load with a threshold value, the system being **characterized in that** the value of the load parameter is a fuzzy logic combination of at least two indicators each defining different performance characteristics of load in the system; wherein said parameter representative of load comprises a network load value.

20. The wireless communication system according to claim 19, comprising a plurality of cells at a cell level and at least one serving node of a general packet radio service (GPRS) type at a subscription level.

21. The wireless communication system according to claim 20, wherein the decision to admit a call is taken at the cell level.

22. The wireless communication system according to claim 20, wherein the decision to admit a call is taken at the subscription level.

**Patentansprüche**

1. Zugangssteuereinheit für Benutzer in einem drahtlosen Kommunikationssystem,
   wobei die Einheit dazu eingerichtet ist, die Zulassung eines Gesprächs, das von einem Benutzer eingeht, abhängig von einem Parameter zu steuern, der für Last in dem System repräsentativ ist,
   und **dadurch gekennzeichnet, dass**
   der Parameter aus einer unscharfe Logik-Komposition von mindestens zwei Indikatoren abgeleitet wird, von denen jeder verschiedene Leistungseigenschaften der Last in dem System bestimmt,
   wobei die Zugangssteuereinheit bestimmt, ob eine Zulassung des Gesprächs gewährt wird, indem der Last-Parameter mit einem Schwellenwert verglichen wird; und
   wobei der Parameter, der für Last repräsentativ ist, einen Netzwerk-Last-Wert umfasst.

2. Einheit nach Anspruch 1, wobei der Last-Parameter und die Indikatoren Zugehörigkeits-Funktionen sind, die unscharfe Werte aufweisen.

3. Einheit nach Anspruch 1, wobei der Last-Parameter und die Indikatoren diskrete Funktionen sind, die diskrete Werte aufweisen.

4. Einheit nach Anspruch 2, wob die Zugehörigkeits-Funktion ein Dreieck ist.

**5.** Einheit nach Anspruch 2, wobei die Zugehörigkeits-Funktion eine gerade Linie ist, die eine Steigung mit entweder zunehmendem oder abnehmendem Gradienten aufweist.

**6.** Einheit nach irgendeinem vorhergehenden Anspruch, wobei die Zugangssteuereinheit in mindestens einem auf Richtlinien basierenden Element des drahtlosen Kommunikationssystems implementiert ist, das auf Regeln basierende Logik zur Konfiguration und dynamischen Abstimmung verwendet.

**7.** Einheit nach irgendeinem vorhergehenden Anspruch, wobei die unscharfe Logik-Komposition eine max-* Komposition ist.

**8.** Einheit nach Anspruch 1 bis 6, wobei die unscharfe Logik-Komposition eine max-min Komposition ist.

**9.** Einheit nach irgendeinem vorhergehenden Anspruch, wobei mindestens einer der zwei Indikatoren ein Qualität-der-Versorgung-Attribut der Last ist.

**10.** Einheit nach Anspruch 9, wobei die Indikatoren eines oder mehrere der folgenden umfassen:

Jitter, Verzögerung, BER, MOS oder Bandbreitenkapazität.

**11.** Einheit nach Anspruch 10, wobei die Indikatoren mindestens teilweise orthogonal zueinander sind.

**12.** Verfahren zur Steuerung der Zulassung von Gesprächen in einem drahtlosen Kommunikationsnetz mit einer Last, wobei das Verfahren **gekennzeichnet ist durch** die Schritte:

Empfangen von mindestens zwei Indikatoren, von denen jeder eine unterschiedliche Leistungseigenschaft der Last in dem Netzwerk bestimmt;
Kombinieren der Indikatoren unter Verwendung von unscharfer Logik, um einen Parameter zu bestimmen, der für die Last des Netzwerks repräsentativ ist;
Vergleichen des Last-Parameters mit einem Schwellenwert; und
Entscheiden, ob ein von einem Benutzer eingehendes Gespräch zugelassen wird, basierend auf dem Last-Parameter, wobei das Entscheiden ein Vergleichen des Last-Parameters mit einem Schwellenwert umfasst, und wobei der Parameter, der für Last repräsentativ ist, einen Netzwerk-Last-Wert umfasst.

**13.** Verfahren nach Anspruch 12, wobei der Schritt des Empfangens von mindestens zwei Indikatoren ein Bilden einer Tabelle für jeden Indikator mit Werten entsprechend dem Lastparameter umfasst.

**14.** Verfahren nach Anspruch 13, wobei die Tabellenwerte diskrete Werte sind.

**15.** Verfahren nach Anspruch 13, wobei die Tabellenwerte Zugehörigkeits-FunktionsWerte sind.

**16.** Verfahren nach Anspruch 13 bis 15, wobei ein erster und ein zweiter Satz von Werten aus jeder Tabelle ausgewählt werden, entsprechend den jeweiligen Indikatoren, abhängig von Werten der Indikatoren in dem System.

**17.** Verfahren nach Anspruch 16, wobei in dem Schritt des Kombinierens der erste und zweite Satz von Werten unter Verwendung der unscharfen Logik-Komposition kombiniert werden, um einen dritten Satz zu bilden.

**18.** Verfahren nach Anspruch 17, wobei der Last-Parameter bestimmt wird durch Auswählen von einem der Werte des dritten Satzes, der dem Indikator entspricht, von dem angenommen wird, dass er der dominantere der mindestens zwei Indikatoren ist.

**19.** Drahtloses Kommunikationssystem mit einer Last, die durch Gespräche gebildet wird, die zwischen Benutzern des Systems übermittelt werden, wobei das System Mittel zum Steuern der Zulassung von Gesprächen, die von den Benutzern eingehen, abhängig von einem Vergleich eines Parameters, der für die Last des Systems repräsentativ ist, mit einem Schwellenwert umfasst;
wobei das System **dadurch gekennzeichnet ist, dass**
der Wert des Last-Parameters eine unscharfe Logik-Kombination von mindestens zwei Indikatoren ist, von denen jeder unterschiedliche Leistungseigenschaften von Last in dem System bestimmt;
wobei der Parameter, der für Last repräsentativ ist, einen Netzwerk-Last-Wert umfasst.

20. Drahtloses Kommunikationssystem nach Anspruch 19, umfassend mehrere Zellen auf einer Zellen-Ebene und mindestens einen bedienenden Knoten eines allgemeinen Paketfunkdienst (GPRS) -Typs auf einer Teilnehmer-Ebene.

21. Drahtloses Kommunikationssystem nach Anspruch 20, wobei die Entscheidung, ein Gespräch zuzulassen, auf der Zellen-Ebene getroffen wird.

22. Drahtloses Kommunikationssystem nach Anspruch 20, wobei die Entscheidung, ein Gespräch zuzulassen, auf der Teilnehmer-Ebene getroffen wird.

**Revendications**

1. Unité de contrôle d'admission pour des utilisateurs dans un système de communication sans fil, ladite unité étant agencée pour contrôler l'admission d'un appel arrivant d'un utilisateur en fonction d'un paramètre qui est représentatif de la charge dans ledit système, et **caractérisée en ce que** le paramètre est dérivé d'une composition de logique floue d'au moins deux indicateurs, chacun définissant différentes caractéristiques de performance de la charge dans ledit système, dans laquelle l'unité de commande d'admission détermine s'il faut permettre l'admission de l'appel en comparant ledit paramètre de charge à une valeur de seuil ; et dans laquelle ledit paramètre représentatif de la charge comprend une valeur de charge de réseau.

2. Unité selon la revendication 1, dans laquelle le paramètre de charge et les indicateurs sont des fonctions d'adhésion ayant des valeurs floues.

3. Unité selon la revendication 1, dans laquelle le paramètre de charge et les indicateurs sont des fonctions discrètes ayant des valeurs discrètes.

4. Unité selon la revendication 2, dans laquelle la fonction d'adhésion est un triangle.

5. Unité selon la revendication 2, dans laquelle la fonction d'adhésion est une ligne droite ayant une pente avec un gradient croissant ou décroissant.

6. Unité selon l'une quelconque des revendications précédentes, dans laquelle l'unité de contrôle d'admission est mise en oeuvre dans au moins un élément basé sur des politiques du système de communication sans fil qui utilise une logique basée sur des règles pour la configuration et le réglage dynamique.

7. Unité selon l'une quelconque des revendications précédentes, dans laquelle la composition de logique floue est une composition max-*.

8. Unité selon les revendications 1 à 6, dans laquelle la composition de logique floue est une composition max-min.

9. Unité selon l'une quelconque des revendications précédentes, dans laquelle au moins l'un des deux indicateurs est une qualité d'attribut d'alimentation de la charge.

10. Unité selon la revendication 9, dans laquelle lesdits indicateurs comprennent un ou plusieurs éléments parmi : gigue, retard, taux d'erreur binaire, MOS ou capacité de largeur de bande.

11. Unité selon la revendication 10, dans laquelle les indicateurs sont au moins dans une certaine mesure orthogonaux l'un par rapport à l'autre.

12. Procédé destiné à contrôler l'admission d'appels dans un réseau de communication sans fil ayant une charge, le procédé étant **caractérisé par** les étapes consistant à :

recevoir au moins deux indicateurs définissant chacun une caractéristique de performance différente de la charge dans le réseau ;
combiner lesdits indicateurs en utilisant une logique floue pour déterminer un paramètre représentatif de la charge du réseau ;
comparer ledit paramètre de charge à une valeur de seuil ; et

décider sur la base dudit paramètre de charge s'il faut admettre un appel arrivant d'un utilisateur, dans lequel ladite étape de décision comprend l'étape consistant à comparer ledit paramètre de charge à une valeur de seuil ; et dans lequel ledit paramètre représentatif de la charge comprend une valeur de charge de réseau.

13. Procédé selon la revendication 12, dans lequel l'étape consistant à recevoir au moins deux indicateurs comprend l'étape consistant à former un tableau pour chaque indicateur ayant des valeurs correspondant au paramètre de charge.

14. Procédé selon la revendication 13, dans lequel les valeurs du tableau sont des valeurs discrètes.

15. Procédé selon la revendication 13, dans lequel les valeurs du tableau sont des valeurs de fonction d'adhésion.

16. Procédé selon les revendications 13 à 15, dans lequel un premier ensemble de valeurs et un deuxième ensemble de valeurs sont sélectionnés dans chaque tableau correspondant aux indicateurs respectifs en fonction des valeurs desdits indicateurs dans le système.

17. Procédé selon la revendication 16, dans lequel, à ladite étape de combinaison, le premier ensemble de valeurs et le deuxième ensemble de valeurs sont combinés pour former un troisième ensemble en utilisant ladite composition de logique floue.

18. Procédé selon la revendication 17, dans lequel le paramètre de charge est déterminé en sélectionnant l'une des valeurs du troisième ensemble qui correspond à l'indicateur supposé être le plus dominant parmi les au moins deux indicateurs.

19. Système de communication sans fil ayant une charge formée par des appels transférés entre des utilisateurs du système, le système comprenant des moyens pour contrôler l'admission d'appels arrivant des utilisateurs en fonction d'une comparaison d'un paramètre qui est représentatif de la charge du système à une valeur de seuil, le système étant **caractérisé en ce que** la valeur du paramètre de charge est une combinaison de logique floue d'au moins deux indicateurs définissant chacun différentes caractéristiques de performance de la charge dans le système ; dans lequel ledit paramètre représentatif de la charge comprend une valeur de charge de réseau.

20. Système de communication sans fil selon la revendication 19, comprenant une pluralité de cellules à un niveau de cellule et au moins un noeud de desserte de type de service de radiocommunications par paquet général (GPRS) à un niveau d'abonnement.

21. Système de communication sans fil selon la revendication 20, dans lequel la décision d'admettre un appel est prise au niveau de cellule.

22. Système de communication sans fil selon la revendication 20, dans lequel la décision d'admettre un appel est prise au niveau d'abonnement.

Figure 1 - Admission control points in 3G network

Figure 2 -Example of how min-min and max-max methods can be interpreted. This figure depicts only one of the many possible relation combination cases

Figure 3 - Discrete CAC Example

Figure 4 - Visualized representation of final network load decision

Figure 5 - Fuzzy example

Figure 6 – Visual representation of Multidimensional Admission Control (MDAC).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6067287 A